# DEMANDE DE BREVET EUROPEEN

(11) **EP 2 105 681 A2**
(43) Date de publication de la demande: **30.09.2009**
(21) Numéro de dépôt: 09360017.9
(22) Date de dépôt: 11.03.2009
(51) Int. Cl.: F24J 2/24, F24J 2/26, F24J 2/46

(54) **Elément de panneau solaire à fluide caloporteur et panneau solaire correspondant**

(30) Priorité: 25.03.2008 FR 0851892
(71) Demandeur: Société Financière Yves Judel, 67720 Hoerdt (FR)
(72) Inventeur: Judel, Yves, 67116 Reichstett (FR)
(74) Mandataire: Nuss, Pierre

(57) **Abrégé**

La présente invention a pour objet un élément de panneau solaire à fluide caloporteur, se présentant essentiellement sous la forme d'un tube plat profilé, pourvu au niveau de chacune de ses extrémités longitudinales opposées d'un tube collecteur transversal, rapporté de manière à réaliser une fermeture étanche de l'extrémité concernée et en communication fluidique avec le volume intérieur dudit tube plat.

Elément (1) **caractérisé en ce que** le tube plat (2) présente en section une forme trapézoïdale aplatie et en ce que la face interne (4') de sa paroi présente des nervures ou des cannelures (5) parallèles s'étendant dans la direction longitudinale dudit tube plat (2).

## Description

La présente invention concerne le domaine des dispositifs de récupération de l'énergie solaire, plus particulièrement les équipements du type panneau solaire à circulation de fluide caloporteur, et a pour objet un élément de panneau solaire à fluide caloporteur et un panneau solaire intégrant au moins deux tels éléments.

Dans l'état de la technique, on connaît déjà de nombreuses réalisations de tels éléments de panneaux solaires sous la forme de tubes plats profilés. Ils sont généralement pourvus au niveau de chacune de leurs extrémités longitudinales opposées d'un tube collecteur transversal, rapporté de manière à réaliser une fermeture étanche de l'extrémité concernée et en communication fluidique avec le volume intérieur dudit tube plat pour assurer la circulation du fluide vers et depuis ce dernier (voir par exemple US-4 265 225, US-4 297 991).

Afin d'augmenter l'absorption de l'énergie solaire par le fluide caloporteur, il a été proposé de munir les tubes plats profilés d'ailettes sur les faces extérieures et intérieures de la portion de paroi exposée au rayonnement solaire (voir notamment WO-2006/135942 et demande de brevet français n° 07 53996 du 23 mars 2007).

Les ailettes extérieures auraient pour fonction de favoriser l'absorption du rayonnement solaire au niveau de la paroi exposée et les ailettes intérieures à augmenter la surface d'échange entre la paroi et le fluide.

Toutefois, de tels tubes pourvus d'ailettes sont relativement difficiles à fabriquer, sont structurellement plus fragiles, présentent des parties saillantes nécessitant un volume de caisson plus important et ne présentent pas à l'usage le rendement attendu.

En outre, la surface efficace d'absorption pouvant être obtenue par juxtaposition côte à côte de tels tubes plats connus n'est pas optimisée, du fait de parois latérales arrondies ou de la nécessité de respecter un écart minimal entre éléments côte à côte.

La présente invention a pour but notamment de pallier les différents inconvénients précités.

A cet effet, l'invention a pour objet un élément de panneau solaire à fluide caloporteur du type évoqué ci-dessus, **caractérisé en ce que** le tube plat présente en section une forme trapézoïdale aplatie et en ce que la face interne de sa paroi présente des nervures ou des cannelures parallèles s'étendant dans la direction longitudinale dudit tube plat.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
La figure 1 est une coupe transversale d'un tube plat faisant partie d'un élément de panneau solaire selon l'invention ;
La figure 2 est une vue à une autre échelle du détail A de la figure 1 ;
la figure 3 est constituée par des vues en coupe transversale superposées d'un tube plat et d'un tube collecteur disposé à 90 ° faisant partie d'un élément selon l'invention, et,
la figure 4 est une vue en coupe longitudinale partielle, au niveau de l'une des extrémités du tube plat, d'un élément selon l'invention.

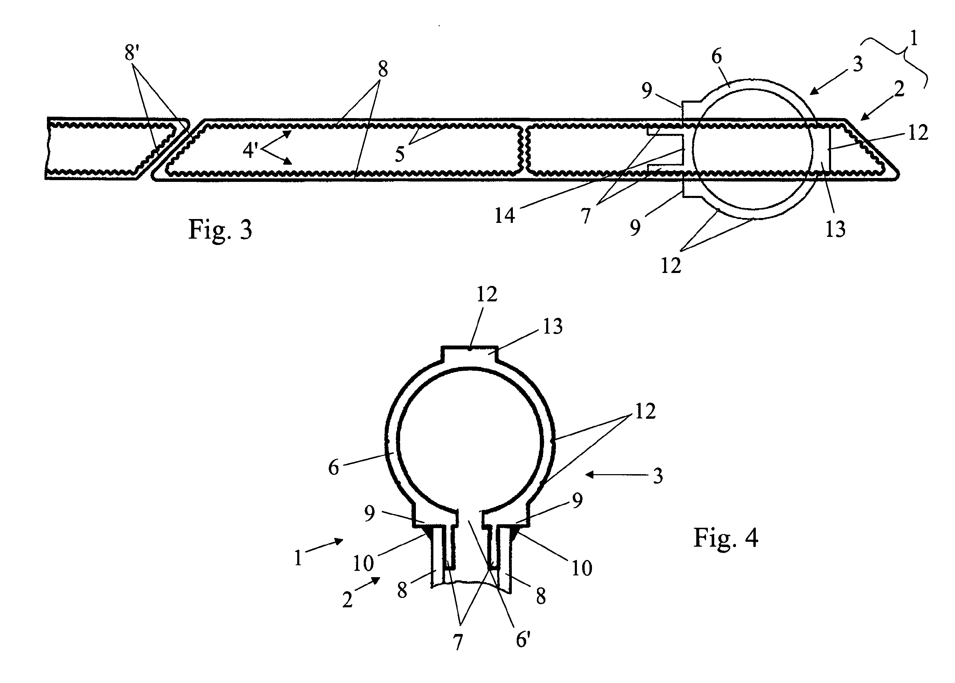

Les figures 3 et 4 montrent un élément 1 de panneau solaire à fluide caloporteur, se présentant essentiellement sous la forme d'un tube plat 2 profilé, pourvu au niveau de chacune de ses extrémités longitudinales opposées d'un tube collecteur 3 transversal, rapporté de manière à réaliser une fermeture étanche de l'extrémité concernée et en communication fluidique avec le volume intérieur dudit tube plat 2.

Conformément à l'invention, le tube plat 2 présente en section une forme trapézoïdale aplatie et la face interne 4' de sa paroi 4 présente des nervures ou des cannelures 5 parallèles s'étendant de manière profilée dans la direction longitudinale dudit tube plat 2.

La forme trapézoïdale autorise un meilleur aboutement latéral de deux éléments côte à côte et facilite la solidarisation par soudage du tube collecteur 3 du fait de la présence d'un angle (préférentiellement 45 °) au niveau du bord latéral du tube plat 2.

Les éléments 1 peuvent être disposés tête-bêche ou en étant tous orientés du même côté. Dans ce dernier cas, la soudure des tubes collecteurs 3 sur les tubes plats 2 sera facilitée.

La présence de nervures 5 sur la face interne 4' augmente de manière significative la surface d'échange fluide/paroi 4, sans création de formations proéminentes fragiles ou rendant plus difficile la fabrication du tube plat. En outre, les nervures 5 modérément proéminentes ne perturbent pas la circulation du fluide et tendent au contraire à le rendre laminaire.

Pour obtenir une surface d'échange maximale et répartie uniformément au niveau du tube plat, l'invention prévoit que les nervures 5 forment un motif régulier et continu sur toute la face interne 4' de la paroi 4.

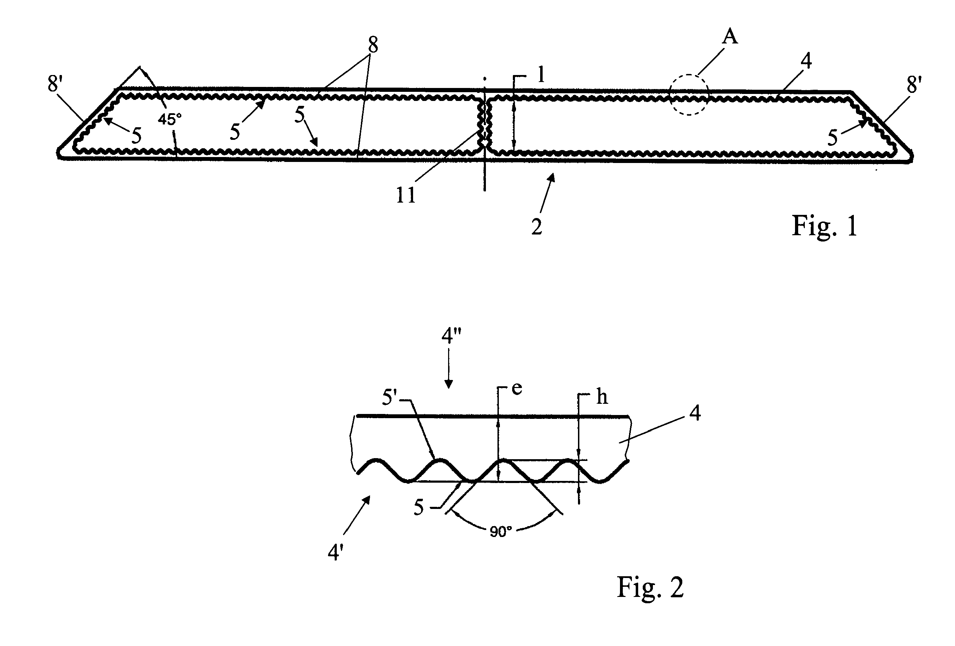

En accord avec un mode de réalisation préféré, et comme le montre plus précisément la figure 2, les nervures parallèles 5 forment en coupe un motif en dents de scies, les sommets des nervures 5 parallèles et les fonds des rainures 5', qui séparent lesdites nervures deux à deux, présentant des surfaces arrondies.

Les faces latérales des nervures 5 sont par exemple planes et inclinées entre elles à 90 ° (figure 2).

En vue d'éviter toute projection d'ombre et d'exposer le maximum de surface extérieure de la paroi 4 au rayonnement solaire, tout en minimisant le volume de matière nécessaire pour la fabrication du tube plat 2, la face extérieure 4" de la paroi 4 du tube plat 2 est lisse, en étant éventuellement pourvue d'un revêtement ou d'un traitement de surface favorisant l'absorption du rayonnement solaire visible et/ou infrarouge.

Conformément à une variante de réalisation pratique très avantageuse de l'invention, il peut être prévu que le tube plat 2 consiste en un segment profilé extrudé en aluminium ou en un alliage à base d'aluminium et que le rapport [hauteur h des nervures/épaisseur maximale e de la paroi 4] soit compris entre 1/5 et 1/3, préférentiellement de l'ordre d'environ 1/4, l'épaisseur maximale e de la paroi 4 étant comprise entre 1,5 mm et 3 mm, préférentiellement de l'ordre de 2 mm (épaisseur maximale = épaisseur au niveau des sommets des nervures / hauteur des nervures : distance entre les fonds des rainures 5' et les sommets des nervures 5).

Comme le montrent les figures 3 et 4 des dessins annexés, chaque tube collecteur 3 est avantageusement formé par un corps profilé tubulaire 6, préférentiellement à section ronde, pourvu sur sa face extérieure d'une formation d'engagement avec le tube plat 2 comprenant, d'une part, deux ailes 7 aptes à s'emboîter de manière ajustée dans l'extrémité du tube plat 2 entre les deux portions de parois principales 8 et, d'autre part, deux épaulements d'appui 9 destinés à venir en butée contre les bords d'extrémité desdites deux portions de paroi 8, les ouvertures 6' de communication fluidique s'étendant entre lesdites ailes 7.

Les nervures 5 favorisent l'emboîtement des ailes 7 du corps 6 par des contacts linéaires espacés et l'assemblage mécanique tube 2/ tube 3 est calé et bloqué de manière précise du fait des surfaces d'appui doubles et mutuellement perpendiculaires fournies par les ailes 7 et les épaulements 8.

En vue de permettre une préhension aisée par des outils du type mors et un positionnement précis lors de l'assemblage tube 2/tube 3, le corps tubulaire 6 peut en outre être muni d'encoches 12 réparties sur sa face externe et éventuellement d'un plot profilé d'indexage de positionnement 13. De plus, un repère de fraisage 14 peut être prévu pour la réalisation des ouvertures 6' par découpe.

Préférentiellement, les tubes collecteurs 3 sont solidarisés aux extrémités du tube plat 2 par soudure au niveau de leurs épaulements d'appui 9, préférentiellement avec apport de métal 10.

La soudure est par exemple du type MIG avec apport de métal, et s'effectue de manière continue sur tout le pourtour de ladite extrémité, sans qu'il soit nécessaire de retoucher les tubes collecteurs 3. Les ailes 7 du tube 3 emboîtées dans le tube 2 servent de renfort d'appui lors de l'opération de soudure et l'inclinaison des portions de paroi latérales 8' facilite la soudure continue.

Selon une caractéristique avantageuse de l'invention, les matériaux métalliques formant le tube plat 2 et les tubes collecteurs 3, ainsi que le métal d'apport 10 de la soudure, présentent des propriétés de dilatation thermiques similaires, voire sont de même nature.

Ainsi, l'élément 1 forme une pièce en un matériau unique, non soumis à des différentiels de dilatation thermique (thermiquement d'un seul tenant).

L'élément 1 et plus particulièrement le tube plat 2 peu(ven)t être dimensionné(s) pour offrir le meilleur compromis entre une accumulation importante et rapide des calories dans le fluide caloporteur et une circulation de ce dernier avec des pertes de charges réduites.

Dans ce contexte, il a été trouvé que ce compromis était optimal lorsque le volume interne du tube plat 2, éventuellement compartimenté en deux canaux de circulation parallèle par une paroi mitoyenne 11, présente une largeur 1 dans la direction perpendiculaire au plan dudit tube plat comprise entre 8 et 10 mm, préférentiellement de l'ordre de 9 mm.

La présente invention a également pour objet un panneau solaire à fluide caloporteur comprenant au moins deux éléments 1 formés chacun par tube plat profilé 2, fermé à ses deux extrémités par des tubes collecteurs 3, les tubes collecteurs 3 des différents éléments 1 étant raccordés entre eux et à un circuit de circulation, lesdits éléments étant préférentiellement montés dans un caisson vitré et thermiquement isolé.

Selon l'invention, lesdits éléments consistent chacun en un élément 1 du type décrit ci-dessus, les éléments 1 étant montés latéralement adjacents entre eux deux à deux de manière tête-bêche avec superposition de leurs portions de paroi latérales 8' inclinées, préférentiellement à 45 ° (voir figure 3).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Elément de panneau solaire à fluide caloporteur, se présentant essentiellement sous la forme d'un tube plat profilé, pourvu au niveau de chacune de ses extrémités longitudinales opposées d'un tube collecteur transversal, rapporté de manière à réaliser une fermeture étanche de l'extrémité concernée et en communication fluidique avec le volume intérieur dudit tube plat, élément (1) **caractérisé en ce que** le tube plat (2) présente en section une forme trapézoïdale aplatie et **en ce que** la face interne (4') de sa paroi (4) présente des nervures ou des cannelures (5) parallèles s'étendant dans la direction longitudinale dudit tube plat (2).

2. Elément selon la revendication 1, **caractérisé en ce que** les nervures (5) forment un motif régulier et continu sur toute la face interne (4') de la paroi (4).

3. Elément selon la revendication 1 ou 2, **caractérisé en ce que** les nervures parallèles (5) forment en coupe un motif en dents de scies, les sommets des nervures (5) parallèles et les fonds des rainures (5'), qui séparent lesdites nervures deux à deux, présentant des surfaces arrondies.

4. Elément selon l'une quelconque des revendications 1 à 3, **caractérisé en ce que** la face extérieure (4") de la paroi (4) du tube plat (2) est lisse, en étant éventuellement pourvue d'un revêtement ou d'un traitement de surface favorisant l'absorption du rayonnement solaire visible et/ou infrarouge.

5. Elément selon l'une quelconque des revendications 1 à 3, **caractérisé en ce que** le tube plat (2) consiste en un segment profilé extrudé en aluminium ou en un alliage à base d'aluminium et **en ce que** le rapport hauteur (h) des nervures/épaisseur maximale (e) de la paroi (4) est compris entre 1/5 et 1/3, préférentiellement de l'ordre d'environ 1/4, l'épaisseur maximale (e) de la paroi (4) étant comprise entre 1,5 mm et 3 mm, préférentiellement de l'ordre de 2 mm.

6. Elément selon l'une quelconque des revendications 1 à 5, **caractérisé en ce que** chaque tube collecteur (3) est formé par un corps profilé tubulaire (6), préférentiellement à section ronde, pourvu sur sa face extérieure d'une formation d'engagement avec le tube plat (2) comprenant, d'une part, deux ailes (7) aptes à s'emboîter de manière ajustée dans l'extrémité du tube plat (2) entre les deux portions de parois principales (8) et, d'autre part, deux épaulements d'appui (9) destinés à venir en butée contre les bords d'extrémité desdites deux portions de paroi (8), les ouvertures (6') de communication fluidique s'étendant entre lesdites ailes (7).

7. Elément selon la revendication 6**, caractérisé en ce que** les tubes collecteurs (3) sont solidarisés aux extrémités du tube plat (2) par soudure au niveau de leurs épaulements d'appui (9), préférentiellement avec apport de métal (10).

8. Elément selon la revendication 7, **caractérisé en ce que** les matériaux métalliques formant le tube plat (2) et les tubes collecteurs (3), ainsi que le métal d'apport (10) de la soudure, présentent des propriétés de dilatation thermiques similaires, voire sont de même nature.

9. Elément selon l'une quelconque des revendications 1 à 8, **caractérisé en ce que** le volume interne du tube plat (2), éventuellement compartimenté en deux canaux de circulation parallèle par une paroi mitoyenne (11), présente une largeur (1) dans la direction perpendiculaire au plan dudit tube plat comprise entre 8 et 10 mm, préférentiellement de l'ordre de 9 mm.

10. Panneau solaire à fluide caloporteur comprenant au moins deux éléments formés chacun par tube plat profilé, fermé à ses deux extrémités par des tubes collecteurs, les tubes collecteurs des différents éléments étant raccordés entre eux et à un circuit de circulation, lesdits éléments étant préférentiellement montés dans un caisson vitré et thermiquement isolé, **caractérisé en ce que** lesdits éléments consistent chacun en un élément (1) selon l'une quelconque des revendications 1 à 9, les éléments (1) étant montés latéralement adjacents entre eux deux à deux de manière tête-bêche avec superposition de leurs portions de paroi latérales (8') inclinées, préférentiellement à 45 °.
